# EUROPÄISCHE PATENTSCHRIFT

(11) **EP 0 493 312 B1**
(45) Veröffentlichungstag und Bekanntmachung des Hinweises auf die Patenterteilung: **10.05.1995**
(21) Anmeldenummer: 91810888.7
(22) Anmeldetag: 15.11.1991
(51) Int. Cl.: F04D 29/04, F04D 29/20

(54) **Laufrad für das Pumpen heisser Reaktorflüssigkeiten**
Impeller for pumping hot fluids in nuclear reactors
Rouet pour pomper les fluides chauds de réacteurs nucléaires

(30) Priorität: 21.12.1990 CH 4110/90
(43) Veröffentlichungstag der Anmeldung: 01.07.1992
(73) Patentinhaber: SULZER PUMPEN AG, CH-8401 Winterthur (CH)
(72) Erfinder: Eichhorn, Günther, CH-8544 Sulz-Attikon (CH); Frei, Arno, CH-8472 Seuzach (CH)
(74) Vertreter: Heubeck, Bernhard

(56) Entgegenhaltungen:
- GB-A- 912 711
- US-A- 2 601 146
- US-A- 4 778 345
- PATENT ABSTRACTS OF JAPAN, Band 11, Nr. 352 (M-643)[2799], 18. November 1987;& JP-A-62 131 996 (TOSHIBA CORP.(1)) 15-06-1987

## Beschreibung

Die Erfindung betrifft ein Laufrad für das Pumpen heisser Reaktorflüssigkeiten gemäss dem Oberbegriff von Anspruch 1.

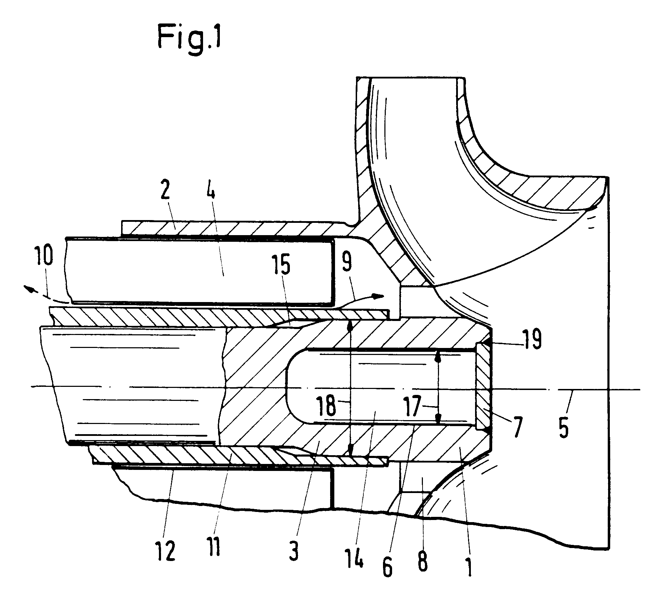

Zirkulationspumpen für heisse Reaktorflüssigkeiten sind in der Nuklearindustrie seit Jahrzehnten in Gebrauch. So zeigt die Zeitschrift Power (11 West 19th St., New York, N.Y. 10011) in einem Special Report von Mai 1974 einen Beitrag von William O'Keefe "Nuclear Fluid-Handling Equipment", in dem auf Seite 3 Zirkulationspumpen gezeigt sind. Eine typische Bauform ist ebenfalls unter Fig. 1 im Artikel "Monitoring for Shaft Cracks on Reactor Recirculation Pumps" von M.G. Kowal und J.T. O'Brien Jr. am "2nd Annual Workshop on Reactor Coolant Recirculation Pump Monitoring" (March 20-21, 1989, Electric Power Research Institute San Francisco, CA) gezeigt worden und in "Sound and Vibration" (May, 1989, page 12, Fig. 1) publiziert worden. Pumpen dieser Art besitzen eine Wärmesperre entlang der Antriebswelle, in der die Temperatur sehr stark gegen Umgebungstemperatur abfällt. Ein Problem in dieser Zone besteht darin, dass sich wegen des grossen Temperaturgefälles und auch wegen wechselnder Betriebsbedingungen Wärmerisse an mechanisch beanspruchten Teilen des Wellenrotors bilden können. Im Bereich der Wärmesperre fliesst eine Hilfsströmung, eine relativ kühle Flüssigkeit, entlang der Antriebswelle zur heissen Reaktorflüssigkeit, die in der Zirkulationspumpe gefördert wird. Die Durchmischung der relativ kühlen Flüssigkeit mit der heissen Reaktorflüssigkeit im Bereich der Wärmesperre führt an der Oberfläche der Antriebswelle zu schnellen Fluktuationen der Flüssigkeitstemperatur, was unerwünschte Spannungen erzeugt und zu Wärmerissen in der Antriebswelle führt.

Aufgabe der Erfindung ist es, die Antriebswelle konstruktiv derart zu verändern, dass Wärmerisse vermieden werden.

Diese Aufgabe wird gelöst gemäss den kennzeichnenden Merkmalen von Anspruch 1.

Die Vorteile der Erfindung sind darin zu sehen, dass der Wärmeeinfall in die Welle reduziert wird und dass innerhalb eines einzelnen Radialschnittes eine gleichmässigere Temperaturverteilung stattfindet, die zu geringeren Spannungsunterschieden führt. Die abhängigen Ansprüche 2 bis 6 beziehen sich auf vorteilhafte Weiterbildungen der Erfindung.

Im folgenden wird die Erfindung anhand von Ausführungsbeispielen beschrieben. Es zeigt:
- Fig. 1: schematisch einen Axialschnitt durch das geschlossene Laufrad einer Zentrifugalpumpe mit Hohlraum am Uebergang zur antreibenden Welle;
- Fig. 2: schematisch einen Schnitt nach Fig. 1 mit einem sackförmigen Deckel und einer Schweissverbindung zwischen Laufradkörper und Wellenstück, und
- Fig. 3: schematisch einen Schnitt nach Fig. 1 mit einer Schrumpfverbindung zwischen Laufradkörper und Wellenstück.

In den Figuren ist ein Laufrad für das Pumpen heisser Reaktorflüssigkeiten gezeigt, das aus einem Laufradkörper mit Lagerhülse und aus einem Wellenstück besteht, welches das Antriebsmoment überträgt. Ein Einsatzstück, das mit dem nicht rotierenden Pumpenteil verbunden ist, bildet mit dem Wellenstück einen Strömungskanal, um eine Hilfsströmung zu führen, die im Fall von Injektionsbetrieb kühle Reaktorflüssigkeit in Flussrichtung zum Laufrad hinführt und die im Fall von Leckagebetrieb heisse Reaktorflüssigkeit zur Abkühlung in Flussrichtung vom Laufrad wegführt. Das Laufrad weist in seiner Drehachse ein Sackloch auf, das bis in das Wellenstück hineinragt und einen Innendurchmesser grösser als 30 % des Wellenaussendurchmessers besitzt, um die axiale Wärmedurchgangsfläche zum Wellenstück zu reduzieren. Das Sackloch ist mit einem Deckel verschlossen und bildet einen Hohlraum der evakuiert oder mit einem schlechten Wärmeleiter gefüllt ist. Der Uebergangsbereich zwischen Laufradkörper und Wellenstück ist auf der Aussenseite durch eine Schutzhülse abgedeckt.

Das Laufrad in Fig. 1 mit Drechachse 5 zeigt ein fliegendes geschlossenes Rad einer Zentrifugalpumpe mit Druckausgleichsbohrungen 8 zur Radrückseite. Der Laufradkörper 1 ist mit einer vorstehenden Lagerhülse 2 versehen, die die Lauffläche für ein hydrostatisches Lager des Wellenrotors bildet. Die umzuwälzende Reaktorflüssigkeit hat am Laufradeintritt gegenüber der Umgebung eine recht hohe Temperatur z.B. 300°C und bewirkt nach aussen einen Wärmefluss entlang des Wellenstücks 3, das zum Laufrad gehört. Am äusseren Ende des Wellenstücks 3 sind Wellendichtungen und ein Kühlbereich notwendig, um die Reaktorflüssigkeit gegen den Innendruck zu sperren und um die im Wellenstück 3 durch Wärmeleitung anfallende Wärme abzuführen.

Im Injektionsbetrieb wird eine Ueberschussmenge an gekühlter Reaktorflüssigkeit im Kühlbereich eingespritzt, die sich in einem ringförmigen Strömungskanal 12 zwischen Rotor und einem Einsatzstück 4 in Durchflussrichtung 9 zum Laufradkörper 1 bewegt.

Im Leckagebetrieb geht eine Leckmenge heisser Reaktorflüssigkeit vom Laufradkörper 1 in Durchflussrichtung 10 durch den Strömungskanal 12 und wird einem Kühler zugeführt bzw. einem Kühlkreislauf beigemischt.

Am Laufrad ist in der Drehachse 5 ein Sackloch 6 angebracht, das durch den Laufradkörper 1 bis in das Wellenstück 3 hineinragt und einen Innendurchmesser 17 besitzt, der grösser als 30 % des Wellenaussendurchmessers 18 ist, um die axiale Durchtrittsfläche für den Wärmestrom klein zu halten. Das Sackloch 6 ist durch eine Schweissnaht 19 mit einem Deckel 7 verschlossen und bildet einen Hohlraum 14, der evakuiert ist oder mit einem Inertgas oder sonstigen schlechten Wärmeleiter gefüllt ist. Der Uebergang zwischen Laufradkörper 1 und Wellenstück 3 ist auf der Aussenseite durch eine Schutzhülse 11 abgedeckt, die die direkte Zirkulation von Reaktorflüssigkeit in axialer Richtung an der Aussenfläche des Wellenstücks 3 verhindert. Die Schutzhülse 11 hat somsit für das Wellenstück 3 eine Dämpfungswirkung, die durch die Wahl eines Materials mit grossem Wärmewiderstand noch verstärkt wird, auf schnelle und grosse Temperaturunterschiede zwischen der Reaktorflüssigkeit in dem Strömungsspalt 12, der zwischen ihrer Aussenfläche und dem Einsatzstück 4 gebildet wird, und dem Wellenstück 3. Da gleichzeitig die axial vom Laufradkörper 1 in das Wellenstück 3 einfallende Wärme im wesentlichen auf den um das Sackloch 6 verminderten Wellenquerschnitt beschränkt ist, fällt ein geringerer Wärmestrom in axialer Richtung an, der sich gleichmässig und ungestört auf den grösseren Querschnitt hinter dem Sackloch 6 mit der entsprechenden Temperaturabsenkung verteilen kann. Im Bereich des Uebergangs zwischen Laufradkörper 1 und Wellenstück 2 ist der engste Axialquerschnitt durch einen Hohlraum 15 in der Schutzhülse 11 überdeckt, damit in diesem Bereich keine mechanischen Kräfte von der Schutzhülse auf die Aussenhaut des Wellenstücks 3 übertragen werden und damit keine direkten Wärmebrücken in diesem Bereich entstehen. Da die Schutzhülse 11 sich in ihrer axialen Wärmeausdehnung gegenüber dem Wellenstück 3 am Wellenaussendurchmesser 18 verschieben kann, füllt sich der Hohlraum 15 mit Reaktorflüssigkeit.

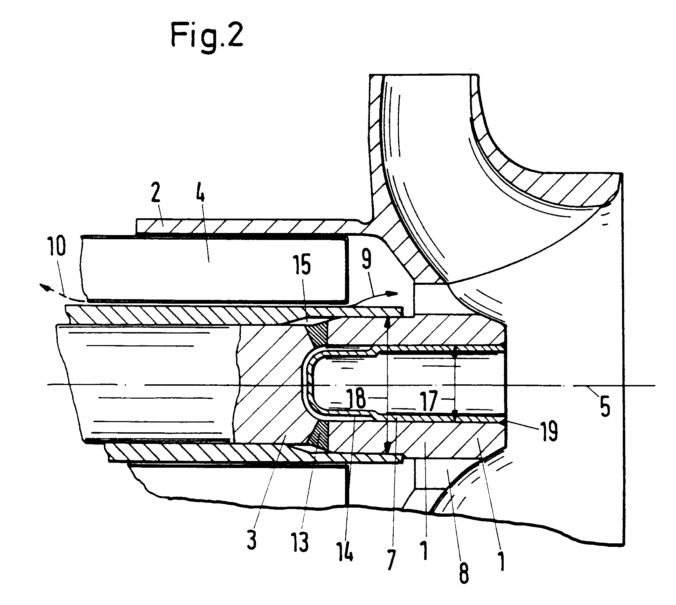

In Fig. 2 sind Laufradkörper 1 und Wellenstück 3 zwei Körper die durch eine Schweissnaht 13 verbunden sind, die im Bereich der Hohlräume 14 und 15 liegt. Der Deckel 7 ist als Sack ausgebildet, der in das Sackloch 6 hineinragt und es ermöglicht, ohne Veränderung des Deckels 7 eine Strahlungsquelle zum Durchstrahlen der Schweissnaht 13 und des Ueberganges zwischen Laufradkörper 1 und Wellenstück 3 einzubringen.

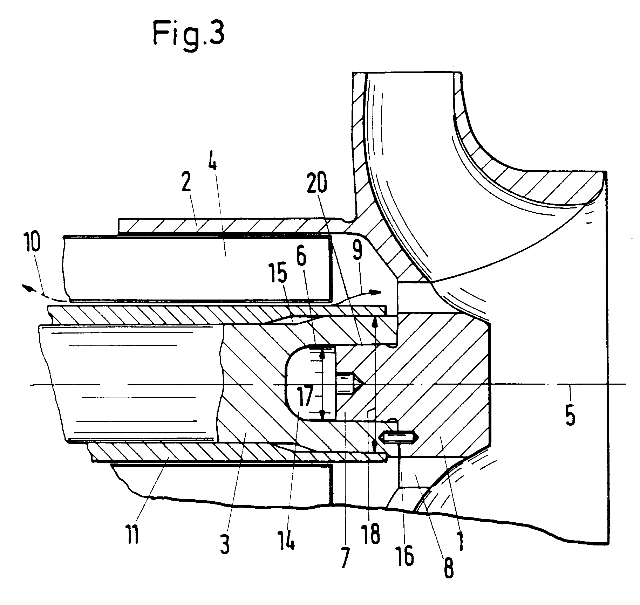

In Fig. 3 sind Laufradkörper 1 und Wellenstück 3 zwei Körper, die durch eine Schrumpfverbindung 20 miteinander verbunden sind. Auf den Deckel 7 als Bestandteil vom Laufradkörper 1 ist das Wellenstück 3 in einem Teilbereich des Sacklochs 6 aufgeschrumpft und bildet eine gasdichte Verbindung. Das Antriebsmoment wird über Pass-Stifte 16 mitübertragen.

## Patentansprüche

1. Laufrad für das Pumpen heisser Reaktorflüssigkeiten bestehend aus einem Laufradkörper (1) mit einer Lagerhülse (2) und aus einem Wellenstück (3), welches das Antriebsmoment überträgt, wobei ein Einsatzstück (4), das mit dem nicht rotierenden Pumpenteil verbunden ist, einen Strömungskanal (12) zum Wellenstück (3) bildet, um eine Hilfsströmung (9, 10) zu führen, dadurch gekennzeichnet, dass das Laufrad in seiner Drehachse (5) ein Sackloch (6) aufweist, welches bis in das Wellenstück (3) hineinragt und einen Innendurchmesser (17) grösser als 30 % des Wellenaussendurchmessers (18) aufweist, um die axiale Wärmedurchgangsfläche zum Wellenstück (3) zu reduzieren, und dass das Sackloch (6) mit einem Deckel (7) verschlossen ist, wobei der entstandene Hohlraum (14) evakuiert oder mit einem Material geringer thermischer Leitfähigkeit gefüllt ist, und dass im Bereich des Ueberganges von dem Laufradkörper (1) auf das Wellenstück (3) überlappend eine Schutzhülse (11) aufgezogen ist, um eine Zirkulation von Reaktorflüssigkeit in axialer Richtung auf der Innenseite der Schutzhülse (11) zu verhindern.

2. Laufrad nach Anspruch 1, dadurch gekennzeichnet, dass im Bereich des Uebergangs von Laufradkörper (1) auf das Wellenstück (3) ein Hohlraum (15) zwischen der Schutzhülse (11) und dem Laufrad gebildet ist, der sich im Betrieb mit Reaktorflüssigkeit füllt.

3. Laufrad nach Anspruch 1, dadurch gekennzeichnet, dass der Deckel (7) als Sack ausgebildet ist, der im Bereich des Uebergangs zum Wellenstück (3) einen Abstand zum Sackloch (6) aufweist, um einen Hohlraum (14) zu bilden.

4. Laufrad nach einem der Ansprüche 1 oder 3, dadurch gekennzeichnet, dass der Laufradkörper (1) und das Wellenstück (3) zwei Körper sind, die durch eine Schweissnaht (13) miteinander verbunden sind.

5. Laufrad nach Anspruch 4, dadurch gekennzeichnet, dass die Schweissnaht (13) im Bereich des Hohlraumes (15) und/oder des Hohlraumes (14) angebracht ist.

6. Laufrad nach Anspruch 1, dadurch gekennzeichnet, dass der Laufradkörper (1) und das Wellenstück (3) zwei Körper sind und dass der Hohlraum (14) durch eine Schrumpfverbindung (20) zwischen dem Laufradkörper (1) und dem Wellenkörper gebildet ist, wobei der Deckel (7) Bestandteil vom Laufradkörper (1) ist.

## Claims

1. A runner for pumping hot reactor liquids, consisting of a runner body (1) with a bearing sleeve (2) and of a piece of shaft (3) which transmits the driving torque, whilst an insert (4) which is connected to the non-rotating part of the pump forms a flow channel (12) with respect to the piece of shaft (3) in order to guide an auxiliary flow (9, 10), characterized in that the runner exhibits on its axis (5) of rotation a blind hole (6) which extends into the piece of shaft (3) and exhibits an inner diameter (17) greater than 30% of the outer diameter (18) of the shaft in order to reduce the area for heat to pass axially to the piece of shaft (3), and that the blind hole (6) is closed off by a cover (7), the cavity (14) which results being evacuated or filled with a material of low thermal conductivity, and that in the region of transition from the runner body (1) to the piece of shaft (3) a protective sleeve (11) is drawn on to overlap in order to prevent a circulation of reactor liquid in the axial direction inside the protective sleeve (11).

2. A runner as in Claim 1, characterized in that in the region of transition from the runner body (1) to the piece of shaft (3) a cavity (15) is formed between the protective sleeve (11) and the runner, which in operation fills with reactor liquid.

3. A runner as in Claim 1, characterized in that the cover (7) is formed as a pocket which in the region of transition to the piece of shaft (3) exhibits a clearance from the blind hole (6) in order to form a cavity (14).

4. A runner as in one of the Claims 1 or 3, characterized in that the runner body (1) and the piece of shaft (3) are two bodies which are connectd together by a seam weld (13).

5. A runner as in Claim 4, characterized in that the seam weld (13) is placed in the region of the cavity (15) and/or of the cavity (14).

6. A runner as in Claim 1, characterized in that the runner body (1) and the piece of shaft (3) are two bodies and that the cavity (14) is formed by a shrink fit (20) between the runner body (1) and the shaft body, the cover (7) being a component part of the runner body (1).

## Revendications

1. Roue à aubes pour le pompage de liquides chauds de réacteurs, constituée d'un corps (1) avec une douille d'appui (2) et d'un bout d'arbre (3), qui transmet le moment d'entraînement, un insert (4), qui est relié à la partie non tournante de la pompe, formant un canal d'écoulement (12) vers le bout d'arbre (3), afin de guider un courant auxiliaire (9, 10), caractérisée en ce que la roue à aubes présente dans son axe de rotation (5) un trou borgne (6), qui s'engage dans le bout d'arbre (3) et présente un diamètre intérieur (17) supérieur à 30 % du diamètre extérieur (18) de l'arbre, afin de réduire la surface de passage axial de la chaleur vers le bout d'arbre (3), et en ce que le trou borgne (6) est fermé par un couvercle (7), la cavité (14) qui en résulte étant mise sous vide ou remplie avec un matériau de faible conductibilité thermique, et en ce que dans la zone de transition du corps (1) de la roue à aubes au bout d'arbre (3), il est enfilé un manchon de protection (11) par recouvrement, afin d'empêcher une circulation du liquide du réacteur dans la direction axiale, sur le côté intérieur du manchon de protection (11).

2. Roue à aubes selon la revendication 1, caractérisée en ce que dans la zone de transition du corps (1) de la roue à aubes au bout d'arbre (3), il est formé une cavité (15) entre le manchon de protection (11) et la roue à aubes, qui se remplit de fluide de réacteur pendant le fonctionnement.

3. Roue à aubes selon la revendication 1, caractérisée en ce que le couvercle (7) est un sac qui présente, dans la zone de transition vers le bout d'arbre (3), une distance par rapport au trou borgne (6), afin de former une cavité (14).

4. Roue à aubes selon l'une des revendications 1 et 3, caractérisée en ce que le corps (1) de la roue et le bout d'arbre (3) sont deux corps, qui sont reliés entre eux par un cordon de soudure (13).

5. Roue à aubes selon la revendication 4, caractérisée en ce que le cordon de soudure (13) est appliqué dans la zone de la cavité (15) et/ou de la cavité (14).

6. Roue à aubes selon la revendication 1, caractérisée en ce que le corps (1) de la roue et le bout d'arbre (3) sont deux corps et en ce que la cavité (14) est formée par un assemblage par rétraction (20) entre le corps (1) de la roue et le corps d'arbre, le couvercle (7) faisant partie intégrante du corps (1).
